# EUROPEAN PATENT APPLICATION

(11) **EP 3 272 804 A1**
(43) Date of publication of application: **24.01.2018**
(21) Application number: 16765038.1
(22) Date of filing: 16.03.2016
(51) Int. Cl.: C08L 23/00, C08K 5/00, C08K 5/098, C08K 5/3435, C08K 5/527, C08L 101/00

(54) **RESIN ADDITIVE MASTER BATCH**

(30) Priority: 18.03.2015 JP 2015054290
(71) Applicant: Adeka Corporation, Tokyo 116-0012 (JP)
(72) Inventor: AYABE Takashi, Saitama-shi Saitama 336-0022 (JP); USUI Takashi, Saitama-shi Saitama 336 -0022 (JP)
(74) Representative: Gill Jennings & Every LLP
(86) International application number: PCT/JP2016/058400
(87) International publication number: WO 2016/148209

(57) **Abstract**

Provided is a resin additive masterbatch in which a low-melting-point resin additive is masterbatched and blocking is suppressed such that blocking does not occur even when the masterbatch is placed in an environment having large temperature fluctuations.

The resin additive masterbatch contains, with respect to 100 parts by mass of (A) a polyolefin resin: 60 to 150 parts by mass of (B) a resin additive having a melting point of 100°C or lower; 0.01 to 3 parts by mass of (C) an organic acid metal salt; and 0.1 to 5 parts by mass of (D) a fatty acid metal salt.

## Description

### TECHNICAL FIELD

The present invention relates to a resin additive masterbatch. More specifically, the present invention relates to a resin additive masterbatch comprising a low-melting-point resin additive at a high concentration, particularly a resin additive masterbatch having excellent storage stability (inhibition of blocking).

### BACKGROUND ART

Liquid compounds as well as low-melting-point compounds that easily become liquid in a high-temperature environment or with application of pressure have poor ease of handling as compared to solid compounds; therefore, a variety of methods have been examined for improving the ease of handling.

For instance, hindered amine compounds obtained by a reaction between stearyl(3,5-di-*tert*-butyl-4-hydroxyphenyl)propionate, bis(2,2,6,6-tetramethyl-4-piperidyl)sebacate or 2,2,6,6-tetramethylpiperidinol and a fatty acid are resin additives that provide excellent weather resistance; however, they have a low molecular weight and are easily liquefied, and their liquid products are viscous and thus have a problem in the ease of handling.

As a method for improving the ease of handling of a low-melting-point resin additive, for example, Patent Document 1 proposes a method of impregnating a resin additive into a powder-form inorganic material having an oil absorption of not less than 150 ml/100 g. Further, in Patent Document 2, a method of preparing a masterbatch by incorporating a resin additive into a resin. Moreover, Patent Documents 3 and 4 show that the tackiness of a masterbatch is reduced and blocking is inhibited by preparing a masterbatch by incorporating a resin additive along with an organic acid metal salt (Patent Document 3) or a combination of an organic acid metal salt and a gelling agent (Patent Document 4).

### RELATED ART DOCUMENTS

### PATENT DOCUMENTS

[Patent Document 1] WO 2007/000876
[Patent Document 2] Japanese Unexamined Patent Application Publication No. 2003-41008
[Patent Document 3] Japanese Unexamined Patent Application Publication No. 2008-189822
[Patent Document 4] Japanese Unexamined Patent Application Publication No. 2011-246589

### SUMMARY OF THE INVENTION

### PROBLEMS TO BE SOLVED BY THE INVENTION

In such a method of impregnating a resin additive into an inorganic material as described in Patent Document 1, impregnation of a resin additive into an inorganic material with stirring may cause wearing of the mixing device. Further, addition of an inorganic material to a synthetic resin may cause a reduction in the transparency of the resulting molded article and an increase in the weight of the resulting molded article and this may lead to the generation of a defective product in the fiber and film applications, so that stable production may not be achieved.

Meanwhile, a method of impregnating a resin additive into a vinyl chloride resin, an elastomer or the like can also be considered as a method of impregnating a resin additive into an organic material; however, in this case, there is a problem that the compatibility between the resin additive and the resin used as matrix must be taken into consideration. Impregnation of a resin additive into an organic material having poor compatibility with the matrix may impair the transparency and physical properties of the resin.

Patent Document 2 proposes a method of solidifying a liquid additive through masterbatching; however, this method has a problem in that, since the liquid additive bleeds out of the resulting masterbatch over time and causes blocking of the masterbatch, the amount of the liquid additive to be incorporated has to be limited.

Moreover, Patent Document 3 shows that an addition of an organic acid metal salt has a superior effect of improving such blocking than an addition of a sorbitol compound or talc, and Patent Document 4 also shows that blocking can be inhibited by incorporating an organic acid metal salt and a gelling agent; however, since these masterbatches have a problem of blocking over time when placed in an environment having large temperature fluctuations, a further improvement is required. Furthermore, the method of Patent Document 4 which utilizes gelation has a problem in that, when the gelling agent does not have sufficient heat resistance, the resulting masterbatch is colored due to decomposition of the gelling agent during processing.

In view of the above, an object of the present invention is to provide a resin additive masterbatch in which a low-melting-point resin additive is masterbatched and blocking does not occur even when the masterbatch is placed in an environment having large temperature fluctuations.

### MEANS FOR SOLVING THE PROBLEMS

In order to solve the above-described problems, the present inventors intensively studied and discovered that the problems can be solved by incorporating an organic acid metal salt and a fatty acid metal salt in specific amounts, thereby completing the present invention.

That is, the resin additive masterbatch of the present invention is characterized by comprising, with respect to 100 parts by mass of (A) a polyolefin resin: 60 to 150 parts by mass of (B) a resin additive having a melting point of 100°C or lower; 0.01 to 3 parts by mass of (C) an organic acid metal salt; and 0.1 to 5 parts by mass of (D) a fatty acid metal salt.

In the resin additive masterbatch of the present invention, it is preferred that the (B) resin additive having a melting point of 100°C or lower comprises one or more selected from the group consisting of hindered amine compounds, phenolic antioxidants, phosphorus-based antioxidants, thioether-based antioxidants, ultraviolet absorbers and flame retardants.

The (B) resin additive having a melting point of 100°C or lower is particularly preferably a hindered amine compound represented by the following Formula (1): 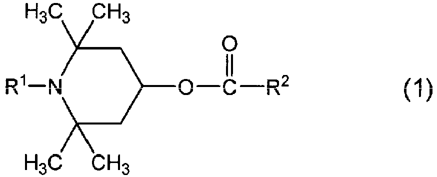 (wherein, R¹ represents a hydrogen atom, a hydroxy group, a branched or linear alkyl, hydroxyalkyl, alkoxy or hydroxyalkoxy group having 1 to 30 carbon atoms, or an oxy radical; and R² represents an alkyl group having 1 to 30 carbon atoms, an alkenyl group having 2 to 30 carbon atoms, or a group represented by the following Formula (2)) 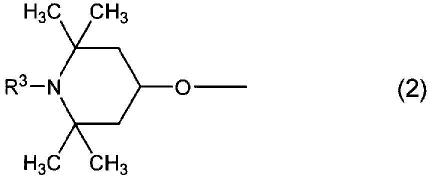 (wherein, R³ represents the same as R¹ in the Formula (1)).

When the resin additive masterbatch of the present invention comprises a hindered amine compound represented by the Formula (1), it is preferred to incorporate (E) a light stabilizer represented by the following Formula (3): 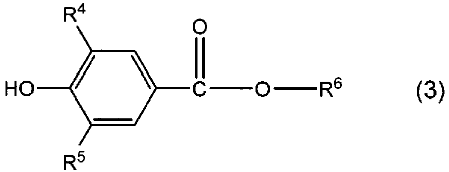 (wherein, R⁴ and R⁵ each independently represent a hydrogen atom, a branched or linear alkyl group having 1 to 12 carbon atoms, or an arylalkyl group having 7 to 30 carbon atoms; and R⁶ represents an alkyl group having 8 to 30 carbon atoms).

In the resin additive masterbatch of the present invention, the (C) organic acid metal salt is preferably a compound represented by the following Formula (4): 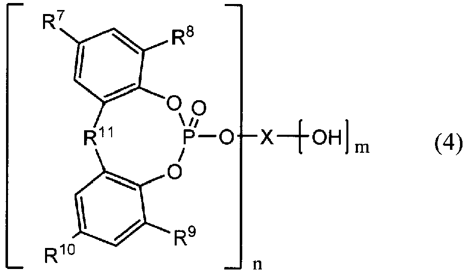 (wherein, R⁷ to R¹⁰ each independently represent a hydrogen atom or a branched or linear alkyl group having 1 to 8 carbon atoms; R¹¹ represents an alkylidene group having 1 to 4 carbon atoms; X represents an alkali metal atom, an alkaline earth metal atom, a zinc atom, or an aluminum atom; when X is an alkali metal atom, n is 1 and m represents 0; when X is an alkaline earth metal atom or a zinc atom, n is 2 and m represents 0; and when X is an aluminum atom, n is 1 or 2 and m represents (3 - n)).

In the resin additive masterbatch of the present invention, the (D) fatty acid metal salt is preferably a compound represented by the following Formula (5): 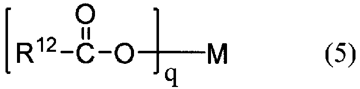 (wherein, R¹² represents an aliphatic group having 1 to 40 carbon atoms which is optionally substituted with at least one selected from a hydroxyl group and cycloalkyl groups; M represents a metal atom; and q is an integer of 1 to 4, representing the valence of the metal atom M).

### EFFECTS OF THE INVENTION

According to the present invention, a resin additive masterbatch comprising a low-melting-point resin additive at a high concentration, in which the occurrence of blocking can be suppressed even under an environment having large temperature fluctuations, can be realized.

### MODE FOR CARRYING OUT THE INVENTION

Embodiments of the present invention will now be described concretely.

### (A) Polyolefin Resin

As the (A) polyolefin resin used in the present invention, any polyolefin can be used with no particular restriction, and examples thereof include homopolymers and copolymers of *α*-olefins, such as polypropylenes, isotactic polypropylenes, syndiotactic polypropylenes, hemi-isotactic polypropylenes, stereoblock polypropylenes, cycloolefin polymers, polyethylenes, low-density polyethylenes, linear low-density polyethylenes, high-density polyethylenes, polybutene-1, poly-3-methylbutene, poly-3-methyl-1-pentene, poly-4-methyl-1-pentene and ethylene-propylene copolymers. For example, polypropylene is particularly preferred as the (A) polyolefin resin.

As for the (A) polyolefin resin, the expression of the effects of the present invention is variable depending on, for example, the stereoregularity, the specific gravity, the type of polymerization catalyst, the presence/absence and extent of removal of the polymerization catalyst, the degree of crystallization, the polymerization conditions such as temperature and pressure, the crystal type, the size of lamella crystal determined by X-ray small-angle scattering method, the aspect ratio of the crystal, the solubility in an aromatic or aliphatic solvent, the solution viscosity, the melt viscosity, the average molecular weight, the degree of molecular weight distribution, the number of peaks in the molecular weight distribution, whether the copolymer thereof is a block or random copolymer, and the blending ratio of each monomer; however, the present invention can be applied to any resin.

In those applications such as automobile components and automobile interior and exterior materials where impact resistance and reduction in shrinkage of a molded article are required, it is preferred that the (A) polyolefin resin is in the form of a mixture with a thermoplastic elastomer. Further, in order to impart necessary functions to the final product, the (A) polyolefin resin can be cross-linked by peroxide or irradiation with an energy ray, or copolymerized with maleic acid and the like.

The term "thermoplastic elastomer" used herein refers to a macromolecular material which can be plasticized (fluidized) at a high temperature and processed like a plastic and exhibits properties of a rubber elastic body (elastomer) at normal temperature. A thermoplastic elastomer is composed of a hard segment (plastic component) and a soft segment (elastic component) and has, for example, a block polymer-type structure in which a hard segment and a soft segment are chemically bound in a single polymer to form a block copolymer, or a blend-type structure called "sea-island dispersion" or "polymer alloy", which is obtained by physically mixing a hard segment and a soft segment.

In the present invention, the hard segment is preferably a polyolefin resin, examples of which include low-density polyethylenes, high-density polyethylenes, linear high-density polyethylenes, linear low-density polyethylenes, branched low-density polyethylenes, ethylene homopolymers, propylene homopolymers, and copolymers of ethylene and an *α*-olefin. Examples of the *α*-olefin include *α*-olefins having 3 to 10 carbon atoms, such as propylene, 1-butene, 1-pentene, 1-hexene, 4-methyl-1-pentene, 1-heptene and 1-octene. The above-described polyolefin resins may be used individually, or two or more thereof may be used in combination.

The soft segment is preferably an elastomer of ethylene and an *α*-olefin. The soft segment may also contain other elastomer in such a range that does not impair the effects of the present invention. Examples of such other elastomer include styrene-based elastomers such as polybutadiene, hydrogenated polybutadiene and hydrogenated polyisoprene; vinyl chloride-based elastomers; polyester-based elastomers such as polyether; polyurethane-based elastomers; nylon-based elastomers; and natural rubbers.

When the above-described thermoplastic elastomer(s) is/are incorporated into the resin additive masterbatch of the present invention, the total amount thereof is preferably 50 parts by mass or less with respect to 100 parts by mass of the polyolefin resin.

Further, the resin additive masterbatch of the present invention may comprise other resin(s) in addition to the (A) polyolefin resin. Examples of such other resins include hydrocarbon resins, hydrogenated hydrocarbon resins (tackifiers), polyacetal resins, aliphatic polyketone resins (ketone resins), polysulfones (e.g., thermoplastic polysulfone, poly(ether sulfone) and poly(4,4'-bisphenol ether sulfone)), polyether ketones, poly(ether ether ketone)s, polyether imides, polyallylates, thermoplastic polyurethane resins (e.g., polymers obtained by reaction between a diisocyanate compound such as tolylene diisocyanate, a glycol and/or a diamine, and polyurethane elastomers optionally having a segment such as polytetramethylene glycol), thermoplastic polyimides, polyoxybenzylenes, and epoxy resins.

When the above-described other resins are incorporated, the total amount thereof is preferably 50 parts by mass or less with respect to 100 parts by mass of the (A) polyolefin resin.

### (B) Resin Additive Having Melting Point of 100°C or Lower

Examples of the resin additive having a melting point of 100°C or lower used in the present invention include hindered amine compounds, phenolic antioxidants, phosphorus-based antioxidants, thioether-based antioxidants, ultraviolet absorbers and flame retardants.

In the present invention, the term "melting point" refers to a value measured using a melting point analyzer (model: MP-90) manufactured by Mettler-Toledo Inc. at a heating rate of 1 °C/min. However, in the case of a polymer, the melting point thereof was determined as the temperature at which the polymer melted when heated at a rate of 1°C/min under microscopic observation. Further, in the present invention, the term "liquid at normal temperature" refers to a compound having a melting point of 25°C or lower.

Examples of the hindered amine compounds having a melting point of 100°C or lower include bis(2,2,6,6-tetramethyl-4-piperidyl)sebacate (melting point = 82 to 87°C), bis(1,2,2,6,6-pentamethyl-4-piperidyl)sebacate (liquid at normal temperature), methyl-1,2,2,6,6-pentamethyl-4-piperidyl sebacate (liquid at normal temperature), bis(1-octyloxy-2,2,6,6-pentamethyl-4-piperidyl)sebacate (melting point = 82 to 85°C), bis(1-undecanoxy-2,2,6,6-tetramethylpiperidyl-4-yl)carbonate (liquid at normal temperature), 1,2,2,6,6-pentamethyl-4-piperidyl methacrylate (liquid at normal temperature), 2,2,6,6-tetramethyl-4-piperidyl methacrylate (liquid at normal temperature), tetrakis(1,2,2,6,6-pentamethyl-4-piperidyl)-1,2,3,4-butanetetracarboxylate (melting point > 65°C), dimethyl succinate/1-(2-hydroxyethyl)-4-hydroxy-2,2,6,6-tetramethyl-4-piperidine polycondensate (Mw = 3,100 to 4,000, melting point = 50 to 70°C), a mixture of bis(1,2,2,6,6-pentamethyl-4-piperidyl)sebacate and methyl-1,2,2,6,6-pentamethyl-4-piperidylsebacate (former trade name "TINUVIN 765", manufactured by BASF Ltd.; liquid at normal temperature), bis[2,2,6,6-tetramethyl-1-(octyloxy)piperidine-4-yl]decanedioate (liquid at normal temperature), a light stabilizer "TINUVIN 791" (trade name, manufactured by BASF Ltd.; melting point = 55°C), a light stabilizer " TINUVIN 783" (former trade name, manufactured by BASF Ltd.; melting point = 55 to 140°C), ADK STAB LA-62 (trade name, manufactured by ADEKA Corporation; liquid at normal temperature), ADK STAB LA-67 (trade name, manufactured by ADEKA Corporation; liquid at normal temperature), ADK STAB LA-68 (trade name, manufactured by ADEKA Corporation; melting point = 70 to 80°C), ADK STAB LA-63 (trade name, manufactured by ADEKA Corporation; melting point = 80 to 90°C), SANDUVOR 3050 (trade name, manufactured by Clariant Japan K.K.; liquid at normal temperature), SANDUVOR 3052 (trade name, manufactured by Clariant Japan K.K.; liquid at normal temperature), and SANDUVOR 3058 (trade name, manufactured by Clariant Japan K.K.; liquid at normal temperature).

In the present invention, a hindered amine compound represented by the following Formula (1) is preferably used: 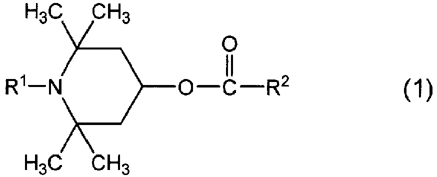 (wherein, R¹ represents a hydrogen atom, a hydroxy group, a branched or linear alkyl, hydroxyalkyl, alkoxy or hydroxyalkoxy group having 1 to 30 carbon atoms, or an oxy radical; and R² represents an alkyl group having 1 to 30 carbon atoms, an alkenyl group having 2 to 30 carbon atoms, or a group represented by the following Formula (2)) 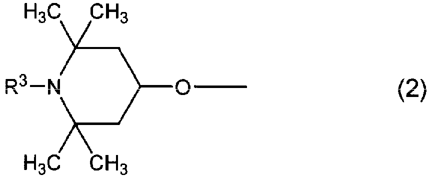 (wherein, R³ represents the same as R¹ in the Formula (1)).

Examples of the alkyl group having 1 to 30 carbon atoms that is represented by R¹ and R² in the Formula (1) include methyl, ethyl, propyl, isopropyl, butyl, isobutyl, *sec*-butyl, *tert*-butyl, pentyl, *sec*-pentyl, *tert*-pentyl, hexyl, heptyl, octyl, isooctyl, 2-ethylhexyl, *tert*-octyl, nonyl, isononyl, decyl, undecyl, dodecyl, tridecyl, tetradecyl, pentadecyl, hexadecyl, heptadecyl, and octadecyl. R¹ and R² may be the same or different.

Examples of the hydroxyalkyl group having 1 to 30 carbon atoms that is represented by R¹ in the Formula (1) include the above-described alkyl groups substituted with a hydroxy group, such as hydroxyethyl, 2-hydroxypropyl and 3-hydroxypropyl.

Examples of the alkoxy group having 1 to 30 carbon atoms that is represented by R¹ in the Formula (1) include those alkoxy groups that correspond to the above-described alkyl groups, such as methoxy, ethoxy, propoxy, isopropoxy, butoxy, octoxy, 2-ethylhexyloxy and undecyloxy.

Examples of the hydroxyalkoxy group having 1 to 30 carbon atoms that is represented by R¹ in the Formula (1) include those hydroxyalkoxy groups that correspond to the above-described alkoxy groups, such as hydroxyethyloxy, 2-hydroxypropyloxy, 3-hydroxypropyloxy, 4-hydroxybutyloxy, 2-hydroxy-2-methylpropyloxy and 6-hydroxyhexyloxy.

Examples of the alkenyl group having 2 to 30 carbon atoms that is represented by R² in the Formula (1) include vinyl, propenyl, butenyl, hexenyl and oleyl. The double bond thereof may be located internally or at the *α*- or *ω*-position.

More specific examples of the hindered amine compound that is represented by the Formula (1) and can be used in the present invention include the following Compound Nos. 1 to 9. It is noted here, however, that the present invention is not restricted thereto by any means. The "mixed alkyl groups" in Compound Nos. 7 and 8 represents a mixture of hindered amine compounds of the Formula (1) wherein R¹ is an alkyl group having 15 to 17 carbon atoms, and the "mixed alkyl groups" in Compound No. 9 represents a mixture of hindered amine compounds of the Formula (1) wherein R¹ is an alkyl group having 13 to 19 carbon atoms.

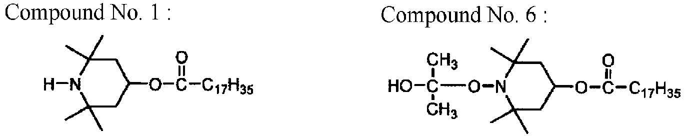

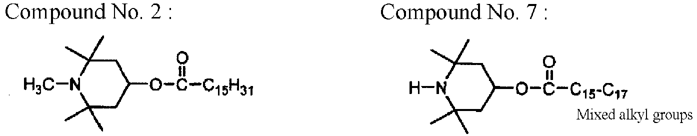

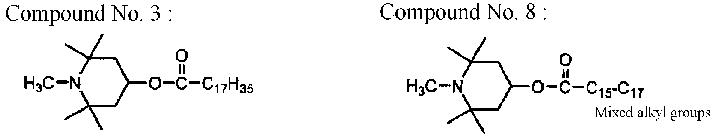

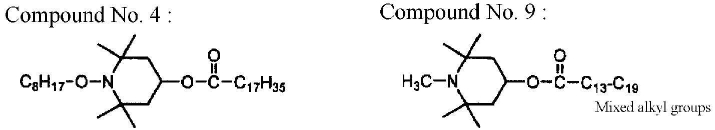

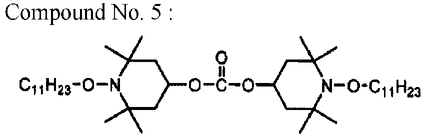

In the hindered amine compound represented by the Formula (1), R¹ is preferably a hydrogen atom, a methyl group or an alkoxy group, and R² is preferably a mixture of alkyl groups having 8 to 26 carbon atoms.

As a method of synthesizing the hindered amine compound represented by the Formula (1), a fatty acid having a prescribed number of carbon atoms and an alcohol having a 2,2,6,6-tetramethylpiperidinol skeleton may be allowed to react with each other and, for example, esterification can be performed by direct esterification between an acid and an alcohol, reaction between an acid halide and an alcohol, transesterification reaction or the like. As a purification method, for example, distillation, recrystallization, or a method using a filter medium or an adsorbent can be employed as appropriate.

In the resin additive masterbatch of the present invention, it is preferred to use the hindered amine compound represented by the Formula (1) in combination with a benzoate compound represented by the following Formula (3), which is a light stabilizer: 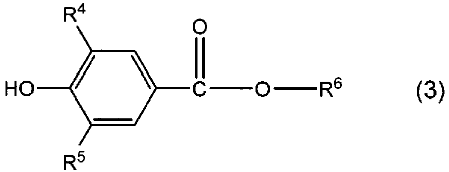 (wherein, R⁴ and R⁵ each independently represent a hydrogen atom, a branched or linear alkyl group having 1 to 12 carbon atoms, or an arylalkyl group having 7 to 30 carbon atoms; and R⁶ represents an alkyl group having 8 to 30 carbon atoms).

In the benzoate compound represented by the following Formula (3), examples of the alkyl group having 8 to 30 carbon atoms that is represented by R⁶ include decyl, undecyl, dodecyl, tridecyl, tetradecyl, pentadecyl, hexadecyl, heptadecyl, octadecyl, and behenyl.

Examples of the alkyl group having 1 to 12 carbon atoms that is represented by R⁴ and R⁵ include methyl, ethyl, propyl, isopropyl, butyl, *sec-*butyl, *tert*-butyl, pentyl, *tert*-pentyl, hexyl, heptyl and octyl, and examples of the arylalkyl group having 7 to 30 carbon atoms include benzyl, phenylethyl, and 1-methyl-1-phenylethyl.

Specific examples of the benzoate compound represented by the Formula (3) include the following compounds. It is noted here, however, that the present invention is not restricted thereto by any means.

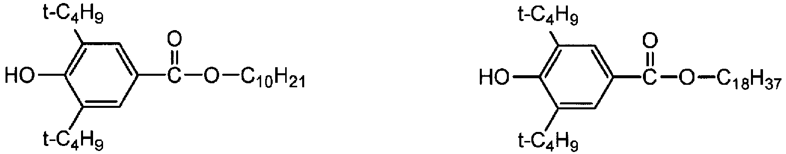

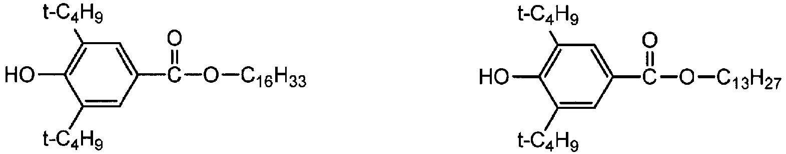

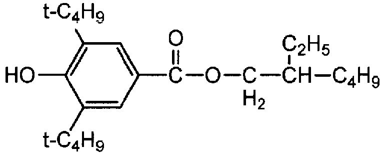

In the present invention, the ratio of the hindered amine compound, which is the (B) resin additive having a melting point of 100°C or lower, and the benzoate compound represented by the Formula (3) is in a range of preferably 1/4 to 4/1, more preferably 1/3 to 3/1, in terms of mass ratio.

In the present invention, examples of the phenolic antioxidants having a melting point of 100°C or lower include 2,6-di-*tert*-butyl-*p*-cresol (melting point = 69 to 73°C), 2-methyl-4,6-bis(octylthiomethyl)phenol (liquid at normal temperature), 2,4-dimethyl-6-(1-methylpentadecyl)phenol (liquid at normal temperature), octyl-3,5-di-*tert*-butyl-4-hydroxy-hydrocinnamate (liquid at normal temperature), 3,4-dihydro-2,5,7,8-tetramethyl-2-(4,6,12-trimethyltridecyl)-2*H-*1-benzopyran-6-ol (vitamin E: oily at normal temperature), ethylenebis(oxyethylene)bis-(3-(5-*tert*-butyl-4-hydroxy-*m*-tolyl)-propionate) (melting point = 76 to 79°C), and stearyl(3,5-di-*tert*-butyl-4-hydroxyphenyl)propionate (melting point = 50 to 55°C).

In the present invention, among the above-described phenolic antioxidants, stearyl(3,5-di-*tert*-butyl-4-hydroxyphenyl)propionate can be preferably used.

Examples of the phosphorus-based antioxidants having a melting point of 100°C or lower include compounds such as bis[2,4-di-*tert*-butyl-6-methylphenyl]ethylester phosphite (melting point = 89 to 92°C), tetrakis(2,4-di-*tert*-butylphenyl)[1,1-biphenyl]-4,4'-diylbisphosphonite (melting point = 75 to 95°C), 3,9-bis(octadecyloxy)-2,4,8,10-tetraoxa-3,9-diphosphaspiro[5.5]undecane (softening point = 50 to 62°C), 4-nonylphenyl phosphite (liquid at normal temperature), 4,4'-isopropylidene diphenol C12-15 alcohol phosphite (liquid at normal temperature), 2-ethylhexyldiphenyl phosphite (liquid at normal temperature), diphenylisodecyl phosphite (liquid at normal temperature), triisodecyl phosphite (liquid at normal temperature), and triisododecyl phosphite (liquid at normal temperature).

In the present invention, among the above-described phosphorus-based antioxidants, triisodecyl phosphite and triisododecyl phosphite can be preferably used because of their excellent effects of stabilizing synthetic resins.

Examples of the thioether-based antioxidants having a melting point of 100°C or lower include compounds such as 4,6-bis(octylthiomethyl)-*o*-cresol (liquid at normal temperature), didodecyl-3,3'-thiodipropionate (melting point = 39 to 41°C), dioctadecyl-3,3'-thiodipropionate (melting point = 64 to 67°C), 2,6-di-*tert*-butyl-4-(4,6-bis(octylthio)-1,3,5-triazine-2-ylamino)phenol (melting point = 91 to 96°C), 6,6'-di-*tert*-butyl-2,2'-*p*-cresol (melting point = 81 to 86°C), thiodiethylene-bis[3-(3,5-di-*tert*-butyl-4-hydroxyphenyl)propionate] (melting point = 63 to 67°C), 2,2-bis[[3-(dodecylthio)-1-oxopropyloxy]methyl]-1,3-propanediyl bis[3-(dodecylthio)propionate] (melting point = 46 to 52°C), and ditridecyl-3,3'-thiodipropionate (liquid at normal temperature).

In the present invention, among such thioether-based antioxidants as described above, thiodialkyl carboxylic acid dialkyl ester compounds such as ADK STAB AO-23 and ADK STAB AO-26 (trade names, manufactured by ADEKA Corporation) can be preferably used since these compounds can impart excellent stabilization effect to synthetic resins.

Examples of the ultraviolet absorbers having a melting point of 100°C or lower include compounds such as polyethylene glycol mono-3-(3-(2*H*-benzotriazol-2-yl)-5-*tert*-butyl-4-hydroxyphenyl)-1-oxopropyl ether (liquid at normal temperature), 2-(2*H*-benzotriazol-2-yl)-6-dodecyl-4-methylphenol (liquid at normal temperature), 2-(2*H*-benzotriazol-2-yl)-4-(*tert*-butyl)-6-(*sec*-butyl)phenol (melting point = 81 to 84°C), 2-(2*H*-benzotriazol-2-yl)-4,6-di-*tert*-pentylphenol (melting point = 80 to 88°C), 2-hydroxy-4-(octyloxy)benzophenone (melting point = 47 to 49°C), and TINUVIN B75 (former trade name, manufactured by BASF Ltd.; liquid at normal temperature).

In the present invention, among the above-described ultraviolet absorbers, 2-(2*H*-benzotriazol-2-yl)-4-(*tert*-butyl)-6-(*sec*-butyl)phenol, 2-(2*H*-benzotriazol-2-yl)-4,6-di-*tert*-pentylphenol and 2-hydroxy-4-(octyloxy)benzophenone can be preferably used.

Examples of the flame retardants having a melting point of 100°C or lower include bisphenol A-bis(diphenyl phosphate) (liquid at normal temperature) and ADK STAB PFR (trade name, manufactured by ADEKA Corporation; liquid at normal temperature).

In the present invention, among such flame retardants as described above, aromatic phosphate-type compounds can be preferably used since they can impart excellent flame retardancy.

Examples of a compound other than the above-exemplified resin additives having a melting point of 100°C or lower include a reaction product of benzenamine, *N*-phenyl and 2,4,4-trimethylpentene (former trade name "IRGANOX 5057", manufactured by BASF Ltd.; liquid at normal temperature).

In the present invention, the (B) resin additive having a melting point of 100°C or lower may be a resin additive composition which has a melting point of 100°C or lower as an individual compound or as a mixture of the above-described compounds and, in the case of a compound whose starting materials are an aliphatic alcohol and a fatty acid, the (B) resin additive may be any mixture which contains a mixed ester compound (mixed-group ester compound) obtained from a mixed alcohol and a mixed fatty acid and has a melting point of 100°C or lower.

In the present invention, the (B) resin additive having a melting point of 100°C or lower is preferably a compound whose melting point is 100°C or lower but not lower than 20°C, more preferably a compound whose melting point is 100°C or lower but not lower than 25°C. Such compounds are preferred since they enable to easily produce a high-concentration resin additive masterbatch.

The (B) resin additive having a melting point of 100°C or lower is incorporated in an amount of 60 to 150 parts by mass, preferably 80 to 120 parts by mass, with respect to 100 parts by mass of the (A) polyolefin resin. When the amount of the (B) resin additive is less than 60 parts by mass, the masterbatch is required to be added in a large amount and the advantage of a high-concentration masterbatch is diminished. Meanwhile, when the amount of the (B) resin additive is greater than 150 parts by mass, the (B) resin additive may bleed out and cause blocking in the masterbatch, which leads to deterioration of the ease of handling.

### (C) Organic Acid Metal Salt

Examples of the (C) organic acid metal salt used in the present invention include metal carboxylates, such as sodium benzoate, aluminum 4-*tert*-butylbenzoate, sodium adipate and 2-sodium bicyclo[2.2.1]heptane-2,3-dicarboxylate; metal phosphates, such as sodium-bis(4-*tert*-butylphenyl)phosphate, sodium-2,2'-methylene-bis(4,6-di-*tert*-butylphenyl)phosphate and lithium-2,2'-methylene-bis(4,6-di-*tert*-butylphenyl)phosphate; polyhydric alcohol derivatives, such as dibenzylidene sorbitol, bis(methylbenzylidene)sorbitol, bis(3,4-dimethylbenzylidene)sorbitol, bis(*p*-ethylbenzylidene)sorbitol and bis(dimethylbenzylidene)sorbitol; and amide compounds, such as *N*,*N*',*N*"-tris[2-methylcyclohexyl]-1,2,3-propane tricarboxamide, *N*,*N*',*N*"-tricyclohexyl-1,3,5-benzene tricarboxamide, *N*,*N*'-dicyclohexylnaphthalene dicarboxamide and 1,3,5-tri(dimethylpropaneamide)benzene.

In the present invention, a metal organophosphate represented by the following Formula (4) is preferred: 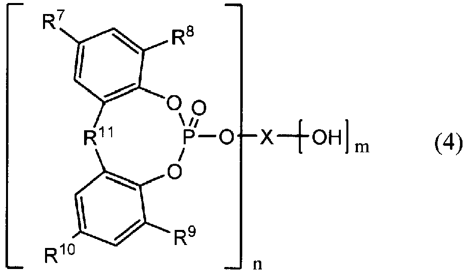 (wherein, R⁷ to R¹⁰ each independently represent a hydrogen atom or a branched or linear alkyl group having 1 to 8 carbon atoms; R¹¹ represents an alkylidene group having 1 to 4 carbon atoms; X represents an alkali metal atom, an alkaline earth metal atom, a zinc atom, or an aluminum atom; when X is an alkali metal atom, n is 1 and m represents 0; when X is an alkaline earth metal atom or a zinc atom, n is 2 and m represents 0; and when X is an aluminum atom, n is 1 or 2 and m represents (3 - n)).

Examples of the branched or linear alkyl group having 1 to 8 carbon atoms that is represented by R⁷ to R¹⁰ in the Formula (4) include methyl, ethyl, propyl, isopropyl, butyl, *sec*-butyl, *tert*-butyl, isobutyl, amyl, *tert*-amyl, hexyl, heptyl, octyl, isooctyl, *tert*-octyl, and 2-ethylhexyl; however, in the present invention, the branched or linear alkyl group having 1 to 8 carbon atoms is particularly preferably a tert-butyl group.

Examples of the alkylidene group having 1 to 4 carbon atoms that is represented by R¹¹ in the Formula (4) include methylidene, ethylidene, propylidene, and butylidene.

Examples of the alkali metal atom represented by X in the Formula (4) include lithium, sodium and potassium; however, the alkali metal atom is particularly preferably sodium or lithium.

Examples of the alkaline earth metal atom represented by X in the Formula (4) include beryllium, magnesium, calcium, strontium, barium, and radium; however, the alkaline earth metal atom is particularly preferably calcium or magnesium.

Examples of a specific structure of the organic acid metal salt represented by the Formula (4) include those of the following Compounds N-1 to N-6. It is noted here, however, that the present invention is not restricted thereto by any means.

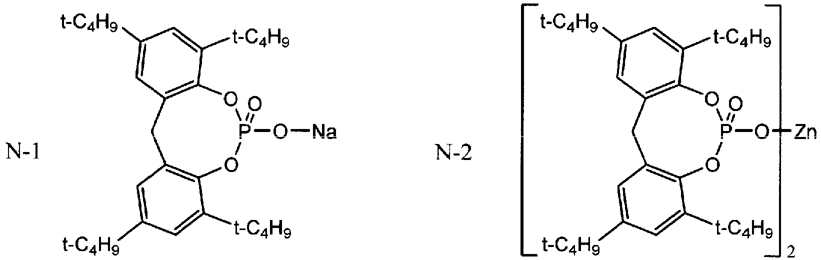

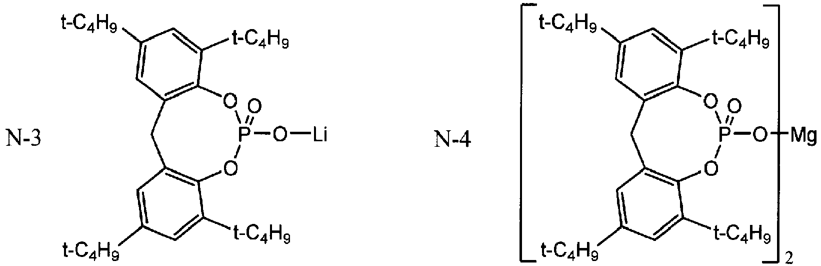

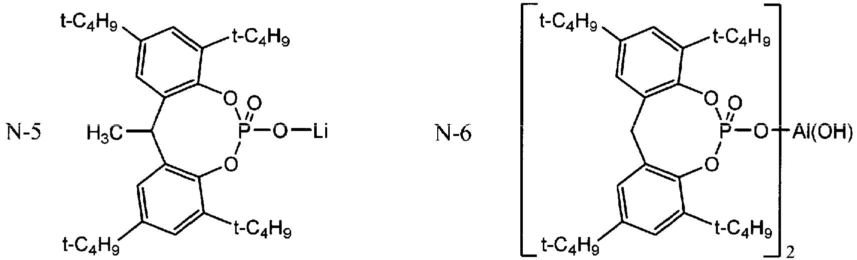

In the resin additive masterbatch of the present invention, the (C) organic acid metal salt is incorporated in an amount of 0.01 to 3 parts by mass, preferably 0.1 to 2 parts by mass, with respect to 100 parts by mass of the (A) polyolefin resin. With the amount of the (C) organic acid metal being less than 0.01 parts by mass, when the components (A) to (D) are melt-kneaded using an extruder, the strand discharged from the extruder is likely to be broken, so that stable production may not be achieved. Stable production may not be achieved also when the amount is greater than 3 parts by mass.

### (D) Fatty Acid Metal Salt

Examples of the (D) fatty acid metal salt used in the resin additive masterbatch of the present invention include compounds represented by the following Formula (5): 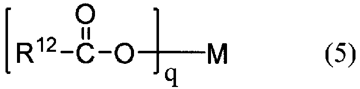 (wherein, R¹² represents an aliphatic group having 1 to 40 carbon atoms which is optionally substituted with at least one selected from a hydroxyl group and cycloalkyl groups; M represents a metal atom; and q is an integer of 1 to 4, representing the valence of the metal atom M).

Examples of the aliphatic group having 1 to 40 carbon atoms that is represented by R¹² in the Formula (5) include hydrocarbon groups such as alkyl groups, alkenyl groups, and alkyl groups in which two or more unsaturated bonds are introduced and, optionally, the aliphatic group has a hydroxyl group(s) and/or a cycloalkyl group(s) or is branched.

Specific examples of the (D) fatty acid metal salt include metal salts of acetic acid, propionic acid, lactic acid, butyric acid, valeric acid, caproic acid, 2-ethylhexanoic acid, enanthic acid, pelargonic acid, caprylic acid, neodecylic acid, undecylic acid, lauric acid, tridecylic acid, myristic acid, pentadecylic acid, palmitic acid, margaric acid, stearic acid, nonadecylic acid, arachidic acid, behenic acid, lignoceric acid, cerotic acid, montanoic acid, melissic acid, obtusilic acid, linderic acid, tsuzuic acid, palmitoleic acid, myristoyleic acid, petroselinic acid, oleic acid, elaidic acid, vaccenic acid, linoleic acid, linoelaidic acid, *γ*-linolenic acid, linolenic acid, ricinoleic acid, naphthenic acid, abietic acid, hydroxyacetic acid, *β*-hydroxypropionic acid, 2-methyl-*β*-hydroxypropionic acid, *α*-hydroxybutyric acid, *β*-hydroxybutyric acid, *γ*-hydroxybutyric acid, monomethylol propionic acid, dimethylol propionic acid, and 12-hydroxystearic acid. Thereamong, metal salts of fatty acids having 10 to 40 carbon atoms, more preferably 12 to 22 carbon atoms are preferred, and metal salts of myristic acid, stearic acid, 12-hydroxystearic acid and the like are particularly preferred.

Examples of the metal atom represented by M in the Formula (5) include alkali metals, magnesium, calcium, strontium, barium, titanium, manganese, iron, zinc, silicon, zirconium, yttrium, barium, and hafnium. Thereamong, alkali metal such as sodium, lithium and potassium can be particularly preferably used.

In the present invention, from the standpoints of performance and relative availability, the fatty acid metal salt is, for example, preferably lithium stearate, magnesium stearate, zinc stearate, lithium myristate, magnesium behenate or lithium 12-hydroxystearate, more preferably zinc stearate.

The above-exemplified fatty acid metal salts can be produced by a synthesis method in which a carboxylic acid compound and a metal hydroxide are allowed to react with each other and the resultant is subsequently washed with water, dehydrated and dried (double decomposition method), or a synthesis method in which materials are allowed to directly react with each other without the use of water (direct method).

The (D) fatty acid metal salt is incorporated in an amount of 0.1 to 5 parts by mass, preferably 0.5 to 4 parts by mass, more preferably 0.5 to 3.5 parts by mass, with respect to 100 parts by mass of the (A) polyolefin resin.

When the amount of the fatty acid metal salt is less than 0.1 parts by mass, the effects of the present invention may not be attained. Meanwhile, when the amount of the fatty acid metal salt is greater than 5 parts by mass, not only the effects of the addition thereof may not be attained but also breakage of the strand discharged from an extruder at the time of producing a resin additive masterbatch by melt-kneading the above-described components (A) to (D) is likely to occur, making it difficult to achieve stable production.

In addition to the above-described components (A) to (D), the resin additive masterbatch of the present invention may also contain an arbitrary and known resin additive(s) (e.g., a phenolic antioxidant, a phosphorus-based antioxidant, a thioether-based antioxidant, an ultraviolet absorber, a hindered amine compound, a flame retardant, a flame retardant aid, a lubricant, a filler, a metallic soap, a hydrotalcite, an antistatic agent, a pigment and a dye) in such a range that does not markedly impair the effects of the present invention. Such known resin additives may be incorporated into a synthetic resin separately from the resin additive masterbatch of the present invention.

Examples of the phenolic antioxidant other than the component (B) include 1,3,5-tris[[3,5-bis(1,1-dimethylethyl)-4-hydroxyphenyl]methyl]-1,3,5-triazine-2,4,6(1*H*,3*H*,5 *H*)trione, 1,1,3-tris(2-methyl-4-hydroxy-5-*tert*-butylphenyl)butane, 4,4'-butylidene-bis(6-*tert*-butyl-*m*-cresol), pentaerythritol tetrakis[3-(3,5-di-*tert*-butyl-4-hydroxyphenyl)propionate], 3,9-bis[1,1-dimethyl-2-[*β*-(3-*tert*-butyl-4-hydroxy-5-methylphenyl)propionyloxy]ethyl]-2,4,8, 10-tetraoxaspiro[5,5]-undecane, and 1,3,5-trimethyl-2,4,6-tris(3',5'-di-*tert*-butyl-4'-hydroxybenzyl)benzene.

Examples of the phosphorus-based antioxidant other than the component (B) include 3,9-bis(2,6-di-*tert*-butyl-4-methylphenoxy)-2,4-8,10-tetraoxa-3,9-diphosphaspiro[5.5]undecan e,
2,4,8,10-tetrakis(1,1-dimethylethyl)-6-[(2-ethylhexyl)oxy]-12*H*-dibenzo[d,g][1,3,2]dioxaphos phocin, and tris(2,4-di-*tert*-butylphenyl)phosphite.

Examples of the ultraviolet absorber other than the component (B) include 2-(2-hydroxy-5-*tert*-octylphenyl)benzotriazole, 2,2'-methylene-bis[6-(benzotriazole-2-yl)-4-*tert*-octylphenol], 2-(2-hydroxy-5-methylphenyl)benzotriazole, 2-(5-chloro-2-benzotriazolyl)-6-*tert-*butyl-*p*-cresol, and 2-(5-chloro-2*H*-benzotriazole-2-yl)-6-*tert*-butyl-4-methylphenol.

In the resin additive masterbatch of the present invention, such known resin additive(s) other than the component (B) is/are incorporated in an amount of preferably less than 50% by mass, more preferably 30% by mass or less, still more preferably 10% by mass or less.

The resin additive masterbatch of the present invention can be obtained by uniformly mixing the above-described components and subsequently melt-kneading the resulting mixture. The method thereof is not particularly restricted, and the resin additive masterbatch of the present invention can be produced by, for example, dry-blending the components using a mixing machine such as a Henschel mixer, a tumbler mixer or the like and then kneading the resultant using an extruder, a Banbury mixer, a roll mixer, a Brabender plastograph, a kneader or the like at a processing temperature of 180°C to 280°C. Particularly, the production is preferably carried out using a Henschel mixer as a mixing machine and an extruder, especially a biaxial extruder, as a processing machine.

In cases where the resin additive masterbatch of the present invention is added to a synthetic resin and the resultant is molded, a known molding method can be employed to perform the molding. For example, when the synthetic resin is a thermoplastic resin, a molded article can be obtained by injection molding, extrusion molding, blow molding, vacuum molding, inflation molding, calender molding, slush molding, dip molding, foam molding or the like.

Meanwhile, when the synthetic resin is a curable resin that can be cured by heat, light, radiation or the like, a molding article can be obtained by compression molding, injection molding, low-pressure molding, laminate molding or the like.

Examples of the synthetic resin include *α*-olefin polymers, such as polypropylene, high-density polyethylene, low-density polyethylene, linear low-density polyethylene, polybutene-1 and poly-3-methylpentene; polyolefins and copolymers thereof, such as ethylene-vinyl acetate copolymers, ethylene-ethyl acrylate copolymers, ethylene-methyl acrylate copolymers, ethylene-acrylic acid copolymers, ethylene-methacrylic acid copolymers, ethylene-vinyl alcohol copolymers and ethylene-propylene copolymers; halogen-containing resins, such as polyvinyl chloride, polyvinylidene chloride, chlorinated polyethylene, chlorinated polypropylene, polyvinylidene fluoride, chlorinated rubbers, vinyl chloride-vinyl acetate copolymers, vinyl chloride-ethylene copolymers, vinyl chloride-vinylidene chloride copolymers, vinyl chloride-vinylidene chloride-vinyl acetate ternary copolymers, vinyl chloride-acrylate copolymers, vinyl chloride-maleate copolymers and vinyl chloride-cyclohexylmaleimide copolymers; petroleum resins; coumarone resins; polystyrene; polyvinyl acetate; acrylic resins; copolymers (e.g., AS resins, ABS resins, MBS resins and heat-resistant ABS resins) composed of styrene and/or *α*-methylstyrene with other monomer (e.g., maleic anhydride, phenylmaleimide, methyl methacrylate, butadiene or acrylonitrile); linear polyesters, such as polymethyl methacrylate, polyvinyl alcohol, polyvinyl formal, polyvinyl butyral, polyethylene terephthalate and polybutylene terephthalate; polyamides, such as polyphenylene oxide, polycaprolactam and polyhexamethylene adipamide; thermoplastic resins and blends thereof, such as polycarbonate, polycarbonate/ABS resin, branched polycarbonate, polyacetal, polyphenylene sulfide, polyurethane, triacetyl cellulose and cellulose-based resins; and thermosetting resins, such as phenol resins, urea resins, melamine resins, epoxy resins and unsaturated polyester resins. Further, the synthetic resin may be an elastomer, such as an isoprene rubber, a butadiene rubber, an acrylonitrile-butadiene copolymer rubber or a styrene-butadiene copolymer rubber. These synthetic resins may be used individually, or two or more thereof may be used in combination.

In the present invention, a polyolefin resin selected from copolymers and the like of *α*-olefin polymer (e.g., polypropylene, high-density polyethylene, low-density polyethylene, linear low-density polyethylene, polybutene-1 or poly-3-methylpentene) and ethylene or propylene is preferred.

It is desired that the resin additive masterbatch of the present invention be added in such an amount that the component (B) is incorporated in an amount of 0.01 to 10 parts by mass with respect to 100 parts by mass of the synthetic resin. When the amount is less than 0.01 parts by mass, the effects of adding the component (B) may not be expressed, whereas when the amount is greater than 10 parts by mass, the effects of the addition may not be attained, which is uneconomical.

### EXAMPLES

The present invention will now be described by way of examples and comparative examples thereof; however, the present invention is not restricted thereto by any means.

A homopolypropylene (MFR = 8 g/10 min), (B) a resin additive having a melting point of 100°C or lower, (C) an organic acid metal salt and (D) a fatty acid metal salt were mixed in accordance with the respective formulations shown in Table 1, and the resulting mixtures were each melt-kneaded and granulated using a biaxial extruder (trade name "TEX-30α", manufactured by The Japan Steel Works, Ltd.) at a melting temperature of 230°C and a screw speed of 150 rpm, whereby resin additive masterbatches were produced.

The thus obtained resin additive masterbatches were each added to a cylindrical container of 3.5 cm in diameter up to a height of 4 cm from the bottom, a 1 mm-thick disk was placed on the sample, and a 3-kg weight was set on the disk. Each resultant was subjected to 5 cycles of 2-hour heating at 60°C and 2-hour cooling at -10°C and subsequently left to stand for 2 hours at normal temperature (25°C), after which the occurrence of blocking was checked for each resin additive masterbatch. When blocking was observed, a load was gradually applied to the cylindrically formed resin additive masterbatch from the above, and the load at which the cylindrical shape collapsed was determined. The results thereof are shown in Table 1 below.

**[Table 1]**

| | (A) [parts by mass] | (B) [parts by mass] | (C) [parts by mass] | (D) [parts by mass] | Other [parts by mass] | Crushing force [N] |
|---|---|---|---|---|---|---|
| Example 1 | Homo-PP⁽¹⁾ 48.65 | LA402⁽²⁾ 50 | NA-11⁽³⁾ 0.05 | Zn-St⁽⁴⁾ 0.3 | 2112⁽⁸⁾ 0.1 | 21 |
| Example 2 | Homo-PP⁽¹⁾ 49 | LA402⁽²⁾ 50 | NA-11⁽³⁾ 0.6 | Zn-St⁽⁴⁾ 0.3 | 2112⁽⁸⁾ 0.1 | 12 |
| Example 3 | Homo-PP⁽¹⁾ 48.8 | LA402⁽²⁾ 50 | NA-11⁽³⁾ 0.6 | Zn-St⁽⁴⁾ 0.5 | 2112⁽⁸⁾ 0.1 | 16 |
| Example 4 | Homo-PP⁽¹⁾ 48.5 | LA402⁽²⁾ 50 | NA-11⁽³⁾ 0.6 | Zn-St⁽⁴⁾ 0.8 | 2112⁽⁸⁾ 0.1 | 14 |
| Example 5 | Homo-PP⁽¹⁾ 47.8 | LA402⁽²⁾ 50 | NA-11⁽³⁾ 0.6 | Zn-St⁽⁴⁾ 1.5 | 2112⁽⁸⁾ 0.1 | 9 |
| Example 6 | Homo-PP⁽¹⁾ 47.8 | LA402⁽²⁾ 50 | Na-Bz⁽⁷⁾ 0.6 | Zn-St⁽⁴⁾ 1.5 | 2112⁽⁸⁾ 0.1 | 25 |
| Comparative Example 1 | Homo-PP⁽¹⁾ 49.3 | LA402⁽²⁾ 50 | NA-11⁽³⁾ 0.6 | | 2112⁽⁸⁾ 0.1 | 40 |
| Comparative Example 2 | Homo-PP⁽¹⁾ 46.3 | LA402⁽²⁾ 50 | NA-11⁽³⁾ 0.6 | Talc⁽⁵⁾ 3 | 2112⁽⁸⁾ 0.1 | 35 |
| Comparative Example 3 | Homo-PP⁽¹⁾ 48.3 | LA402⁽²⁾ 50 | NA-11⁽³⁾ 0.6 | SEBS⁽⁶⁾ 1 | 2112⁽⁸⁾ 0.1 | 45 |
| Comparative Example 4 | Homo-PP⁽¹⁾ 46.3 | LA402⁽²⁾ 50 | NA-11⁽³⁾ 0.6 | SEBS⁽⁶⁾ 3 | 2112⁽⁸⁾ 0.1 | 87 |
| Comparative Example 5 | Homo-PP⁽¹⁾ 44.3 | LA402⁽²⁾ 50 | NA-11⁽³⁾ 0.6 | SEBS⁽⁶⁾ 5 | 2112⁽⁸⁾ 0.1 | 126 |
| Comparative Example 6 | Homo-PP⁽¹⁾ 48.4 | LA402⁽²⁾ 50 | | Zn-St⁽⁴⁾ 1.5 | 2112⁽⁸⁾ 0.1 | stable production was not achieved |
| Comparative Example 7 | Homo-PP⁽¹⁾ 46.9 | LA40⁽²⁾ 50 | NA-11⁽³⁾ 1.5 | Zn-St⁽⁴⁾ 1.5 | 2112⁽⁸⁾ 0.1 | stable production was not achieved |
| Comparative Example 8 | Homo-PP⁽¹⁾ 37.8 | LA402⁽²⁾ 60 | NA-11⁽³⁾ 0.6 | Zn-St⁽⁴⁾ 1.5 | 2112⁽⁸⁾ 0.1 | could not be evaluated |
| Comparative Example 9 | Homo-PP⁽¹⁾ 46.3 | LA402⁽²⁾ 50 | NA-11⁽³⁾ 0.6 | Zn-St⁽⁴⁾ 3 | 2112⁽⁸⁾ 0.1 | could not be evaluated |

| | | | | | | |
|---|---|---|---|---|---|---|
| (1) Homo-PP: homopolypropylene (MFR = 8 g/10 min) (2) LA-402: trade name "LA-402", manufactured by ADEKA Corporation (melting point: 33°C, a mixture of a reaction product between 2,2,6,6-tetramethyl-4-piperidinol and a fatty acid having 12 to 20 carbon atoms and hexadecyl-3,5-di-*tert*-butyl-4-hydroxybenzoate) (3) NA-11: trade name "ADK STAB NA-11", manufactured by ADEKA Corporation (the above-described Compound N-1) (4) Zn-St: zinc stearate (5) Talc: talc (trade name "MICRO ACE", manufactured by Kyowa Chemical Industry Co., Ltd.) (6) SEBS: styrene-butadiene-styrene elastomer (polystyrene content: 33 wt%, specific gravity: 0.91 g/10 cm³, hydrogenation ratio: 100%) (7) Na-Bz: sodium benzoate (8) 2112: trade name "ADK STAB 2112", manufactured by ADEKA Corporation (2,4-di-*tert*-butyltriphenyl phosphite) | | | | | | |

According to Comparative Example 1, the blocking-improving effect was not satisfactory when a resin additive masterbatch was produced without any (D) fatty acid metal salt.

According to Comparative Examples 2 to 5, the blocking-improving effect was not satisfactory also when a resin additive masterbatch was produced using an inorganic material or a styrene-based elastomer in place of the (D) organic acid metal salt.

According to Comparative Examples 6 and 7, when the (C) organic acid metal salt was not incorporated or incorporated in an amount of greater than 3 parts by mass with respect to 100 parts by mass of the (A) polyolefin resin, the strand discharged from the extruder after the melt-kneading process was easily broken, so that stable production could not be performed.

According to Comparative Example 8, when the (B) resin additive having a melting point of 100°C or lower was incorporated in an amount of greater than 150 parts by mass with respect to 100 parts by mass of the (A) polyolefin resin, the resulting mixture could not be granulated and a test piece could thus not be prepared.

According to Comparative Example 9, when the (D) fatty acid metal salt was incorporated in an amount of greater than 5 parts by mass with respect to 100 parts by mass of the (A) polyolefin resin, the resulting mixture could not be granulated and a test piece could thus not be prepared.

In contrast to the above, from the results of Examples 1 to 6, it was confirmed that all of the resin additive masterbatches according to the present invention exhibited a prominent blocking-improving effect.

## Claims

1. A resin additive masterbatch comprising, with respect to 100 parts by mass of (A) a polyolefin resin:
60 to 150 parts by mass of (B) a resin additive having a melting point of 100°C or lower;
0.01 to 3 parts by mass of (C) an organic acid metal salt; and
0.1 to 5 parts by mass of (D) a fatty acid metal salt.

2. The resin additive masterbatch according to claim 1, wherein said (B) resin additive having a melting point of 100°C or lower is one or more resin additives selected from hindered amine compounds, phenolic antioxidants, phosphorus-based antioxidants, thioether-based antioxidants, ultraviolet absorbers and flame retardants.

3. The resin additive masterbatch according to claim 1, wherein said (B) resin additive having a melting point of 100°C or lower is a hindered amine compound represented by the following Formula (1): 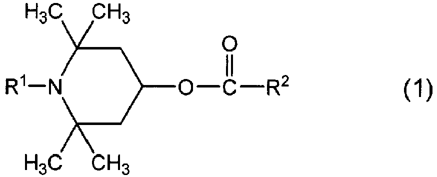
(wherein, R¹ represents a hydrogen atom, a hydroxy group, a branched or linear alkyl, hydroxyalkyl, alkoxy or hydroxyalkoxy group having 1 to 30 carbon atoms, or an oxy radical; and
R² represents an alkyl group having 1 to 30 carbon atoms, an alkenyl group having 2 to 30 carbon atoms, or a group represented by the following Formula (2)) 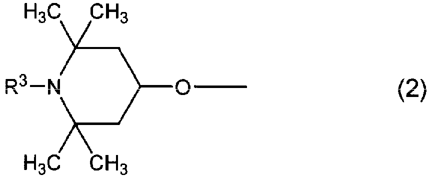 (wherein, R³ represents the same as R¹ in said Formula (1)).

4. The resin additive masterbatch according to claim 3, further comprising (E) a light stabilizer represented by the following Formula (3): 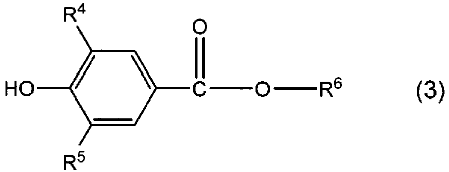
(wherein, R⁴ and R⁵ each independently represent a hydrogen atom, a branched or linear alkyl group having 1 to 12 carbon atoms, or an arylalkyl group having 7 to 30 carbon atoms; and
R⁶ represents an alkyl group having 8 to 30 carbon atoms).

5. The resin additive masterbatch according to claim 1, wherein said (C) organic acid metal salt is a compound represented by the following Formula (4): 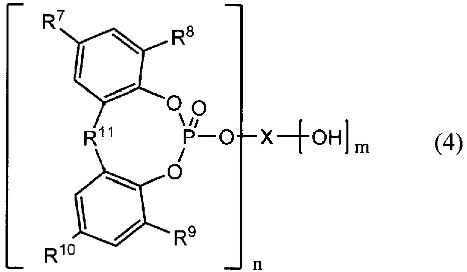
(wherein, R⁷ to R¹⁰ each independently represent a hydrogen atom or a branched or linear alkyl group having 1 to 8 carbon atoms;
R¹¹ represents an alkylidene group having 1 to 4 carbon atoms;
X represents an alkali metal atom, an alkaline earth metal atom, a zinc atom, or an aluminum atom;
when X is an alkali metal atom, n is 1 and m represents 0;
when X is an alkaline earth metal atom or a zinc atom, n is 2 and m represents 0; and
when X is an aluminum atom, n is 1 or 2 and m represents (3 - n)).

6. The resin additive masterbatch according to claim 1, wherein said (D) fatty acid metal salt is a compound represented by the following Formula (5): 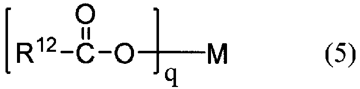
(wherein, R¹² represents an aliphatic group having 1 to 40 carbon atoms which is optionally substituted with at least one selected from a hydroxyl group and cycloalkyl groups;
M represents a metal atom; and
q is an integer of 1 to 4, representing the valence of said metal atom M).
